# EUROPEAN PATENT SPECIFICATION

(11) **EP 3 513 672 B1**
(45) Date of publication and mention of the grant of the patent: **02.09.2020**
(21) Application number: 18197827.1
(22) Date of filing: 01.10.2018
(51) Int. Cl.: A24F 47/00, H01M 2/10

(54) **BATTERY ASSEMBLY AND ELECTRONIC CIGARETTE HAVING SAME**
BATTERIEANORDNUNG UND ELEKTRONISCHE ZIGARETTE DAMIT
ENSEMBLE DE BATTERIE ET CIGARETTE ÉLECTRONIQUE LE COMPRENANT

(30) Priority: 19.01.2018 CN 201820100455 U
(43) Date of publication of application: 24.07.2019
(73) Proprietor: Shenzhen IVPS Technology Co., Ltd., Shenzhen Guangdong 518000 (CN)
(72) Inventor: OUYANG, Junwei, Shenzhen, Guangdong 518000 (CN)
(74) Representative: IP-PAL Patent & Trademark Attorneys GmbH

(56) References cited:
- CN-U- 206 293 498
- CN-U- 206 808 665

## Description

### TECHNICAL FIELD

The invention relates to a battery assembly and an electronic cigarette using the battery assembly.

### BACKGROUND

Electronic cigarettes, also known as electronic cigarettes, are mainly used to quit smoking and replace conventional cigarettes. It has an appearance and taste similar to conventional cigarettes, and even has more tastes than conventional cigarettes. It can generate smoke, a taste and a feel like conventional cigarettes. Without tar, suspension particles and other harmful components in conventional cigarettes, electronic cigarettes have gradually replaced conventional cigarettes on the market. The existing electronic cigarettes supply power to the heat generating unit in the atomizer through the battery assembly, so that the heat generating unit heats the tobacco liquid to generate smoke under the driving of the battery assembly, thereby enabling the user to obtain a smoking experience.

However, since the existing electronic cigarette has many functions and a large power, it is necessary to disassemble the battery frequently for charging. The battery cover of the conventional battery assembly is often of a pulling type or fastening and separating type. The design has the defect that it is easy to wear the battery and have a battery short circuit. At the same time, the battery cover is easily lost, which is inconvenient for the user. Therefore, the battery cover of the existing electronic cigarette product is usually mounted on the main body in a manner of rotating and fastening, like for instance in document CN 206 808 665 U. However, there is also a phenomenon that there is a clearance when the battery cover is in rotating connection with the main body so that it is easy for the user to cause a shake during use, resulting in unstable current contact and abnormal noise.

### SUMMARY

The main object of the invention is to provide a battery assembly, which aims to prevent the phenomenon that the shake of the battery cover during use results in unstable current contact and abnormal noise.

In order to achieve the above object, the invention provides a battery assembly, comprising a main body and a cover, wherein the main body is provided with a battery compartment with an opening, one surface of the cover facing the main body is provided with an electrode contact member, one end of the cover is rotatably mounted on the main body, and the other end is provided with an engaging part, the main body is provided with a locking groove for receiving the engaging part, when the engaging part is received in the locking groove the cover is coupled to the main body via snap-fit connection and covers the opening, the electrode contact member abuts against the battery in the battery compartment to form an electrical circuit, the main body is further provided with at least one elastic member facing the cover, and the elastic member elastically abuts against the cover when the cover is coupled to the main body via snap-fit connection. According to the invention, the cover is further provided with a positioning hole and the elastic member is received in the positioning hole when the cover is coupled to the main body via snap-fit connection.

Preferably, the main body is provided with a receiving groove matching with the cover, one end of the cover far away from the engaging part is provided with a rotating part, the rotating part is provided with a rotatable shaft assembly and a first shaft hole for receiving the rotatable shaft assembly, two side groove walls of the receiving groove are provided with second shaft holes matching with the rotatable shaft assembly, and the rotatable shaft assembly passes through the first shaft hole and is partially received in the two second shaft holes.

Preferably, the first shaft hole is an oblong hole extending in the direction of a line connecting the rotating part and the engaging part, a locked and fixed state is formed when the cover slides along the oblong hole until the engaging part is received in the locking groove, and an activity disengaged state is formed when the cover slides along the oblong hole until the engaging part is disengaged from the locking groove.

Preferably, the rotatable shaft assembly comprises an elastic connecting member, a sleeve received in the first shaft hole, and two limiting heads exposed at both ends of the sleeve, the elastic connecting member is received in the sleeve and is fixedly connected with the two limiting heads, and each of the limiting heads is partially slidably mounted in the sleeve and abuts against the sleeve when sliding to the end position of the sleeve.

Preferably, the receiving groove comprises a narrow-diameter section, a middle-diameter section and a wide-diameter section, the rotating part is received in the narrow-diameter section, an inner wall of the connecting position between the middle-diameter section and the wide-diameter section is recessed toward the middle-diameter section to form a locking groove, the engaging part comprises two stoppers provided at one end of the cover far away from the rotating part, the two stoppers are provided at both sides of the cover and are each convexly provided with a buckle, and the buckle is buckled to the locking groove to form a locked and fixed state when the stopper slides along the large-diameter section until being in contact with the end of the middle-diameter section.

Preferably, the main body is further provided with a receiving hole for receiving the elastic member, one end of the elastic member is received in the receiving hole and is fixedly connected with the main body, and the other end elastically abuts against the cover when the cover is coupled to the main body via snap-fit connection.

Preferably, the elastic member is an elastic thimble, a spring or an elastic plastic.

Preferably, the elastic member is provided on the small-diameter section and is provided directly facing the rotating part, the rotating part abuts against the elastic member when the cover is mounted on the main body, and the rotating part is provided with an avoidance groove corresponding to the elastic member.

The invention further provides an electronic cigarette comprising an atomizer and a battery assembly, wherein the battery assembly comprises a main body and a cover, the main body is provided with a battery compartment with an opening, one end of the cover toward the main body is provided with an electrode contact member, one end of the cover is rotatably mounted on the main body, and the other end is provided with a engaging part, the main body is provided with a locking groove for receiving the engaging part, the cover is coupled to the main body via snap-fit connection and covers the opening when the engaging part is received in the locking groove, the electrode contact member abuts against the battery in the battery compartment to form an electrical circuit, the main body is further provided with at least one elastic member toward the cover, and the elastic member elastically abuts against the cover when the cover is coupled to the main body via snap-fit connection.

For the battery assembly of the technical solution of the invention, one end of the cover is rotatably mounted on the main body. During the process of assembling and disassembling the battery, when the cover is opened and closed, there is no abrasion between the electrode contact member provided on the cover and the electrode of the battery so as to cause a short circuit, and the cover will not be separated from the main body and is lost, which improves the safety and convenience. Moreover, in the technical solution of the invention, the main body is further provided with at least one elastic member toward the cover. When being mounted on the main body, the cover squeezes the elastic member, so that the elastic member has a certain elastic force on the cover, so that the cover is less likely to shake relative to the main body, further preventing the phenomenon that there is no abrasion between the electrode contact member provided on the cover and the electrode of the battery so as to cause a short circuit, and preventing the phenomenon that the shake of the battery cover during use results in unstable current contact and abnormal noise.

### BRIEF DESCRIPTION OF THE DRAWINGS

For a better illustration of the embodiments of the invention or the technical solution in the prior art, accompanying drawings needed in the description of the embodiments or the prior art are simply illustrated below. Obviously, the accompanying drawings described below are some embodiments of the invention. For those skilled in the art, other accompanying drawings may be obtained according to the structure shown in these accompanying drawings without creative work.
FIG.1 is a schematic exploded diagram illustrating a connecting structure of a battery assembly according to the invention.
FIG. 2 is a schematic perspective diagram illustrating a mounting structure of a rotatable shaft assembly according to the invention.
FIG.3 is a partial enlarged schematic diagram at A in FIG.2 according to the invention.
FIG.4 is a partial cross-sectional schematic diagram illustrating the locked and fixed state of the battery assembly according to the invention.
FIG. 5 is a schematic diagram illustrating the activity disengaged state of the battery assembly according to the invention.
FIG. 6 is a schematic perspective diagram illustrating a connecting structure of a cover according to the invention.
FIG.7 is a schematic exploded diagram illustrating a connecting structure of a cover according to the invention.

**Description of the reference numbers:**

| Reference number | Name of part | Reference number | Name of part |
|---|---|---|---|
| 100 | battery assembly | 36 | electrode mounting plate |
| 10 | main body | 32 | engaging part |
| 11 | battery compartment | 321 | stopper |
| 12 | locking groove | 3211 | buckle |
| 13 | receiving groove | 33 | rotating part |
| 131 | second shaft hole | 331 | rotatable shaft assembly |
| 132 | narrow-diameter section | 3312 | sleeve |
| 133 | middle-diameter section | 3313 | limiting head |
| 134 | wide-diameter section | 332 | first shaft hole |
| 14 | receiving hole | 333 | avoidance groove |
| 30 | cover | 34 | positioning hole |
| 31 | electrode contact member | 35 | handle |
| 311 | mounting hole | 50 | elastic member |

The implementation of aims, the function features and the advantages of the present disclosure are described below in further detail in conjunction with embodiments with reference to the drawings.

### DESCRIPTION OF THE EMBODIMENTS

A clear and complete description as below is provided for the technical solution in the embodiments of the invention in conjunction with the drawings in the embodiments of the invention. Obviously, the embodiments described hereinafter are simply part embodiments of the invention, rather than all the embodiments. All other embodiments obtained by those skilled in the art based on the embodiments in the invention without creative work are intended to be comprised in the scope of protection of the invention.

It should be noted that all directional indications (such as top, bottom, left, right, front, behind...) in the embodiments of the invention are merely to illustrate a relative position relation, a relative motion condition, etc. between each part in a certain state (for example, the state shown in the drawings). If the state changes, the directional indication changes accordingly.

In addition, if terms "first", "second", etc. appear in the invention, they are merely for the purpose of description, but cannot be understood as the indication or implication of relative importance or as the implicit indication of the number of the designated technical features; therefore, features defined by "first" and "second" may specifically or implicitly comprise at least one such feature. In addition, technical solutions of each embodiment of the invention may be combined mutually; however, this must be carried out on the basis that those skilled in the art can implement the combination. When the combination of technical solutions has a conflict or cannot be implemented, it should be considered that such combination of technical solutions does not exist and is not in the scope of protection claimed by the invention.

In the invention, unless otherwise specifically stated and defined, terms "connected", "fixed", etc. should be interpreted expansively. For example, "fixed" may be fixed connection, detachable connection, or integration; may be mechanical connection or electrical connection; direct connection, indirect connection through an intermediate, or internal communication between two elements or interaction of two elements, unless otherwise specifically defined. Those skilled in the art can understand the specific implication of the above terms in the invention according to specific conditions.

The invention provides a battery assembly 100, which is applied to an electronic cigarette. The electronic cigarette comprises an atomizer (not shown). An oil storing chamber and a heat generating assembly are provided in the atomizer. The battery assembly 100 is provided with an atomizer joint which is fixedly electrically connected with the atomizer, and the main control board provided in the battery assembly 100 controls the output current of the power supply to supply power to the heat generating assembly in the atomizer, so that the heat generating assembly heats tobacco tar when driven by the battery assembly 100 to generate smoke, thus giving the user a smoking experience.

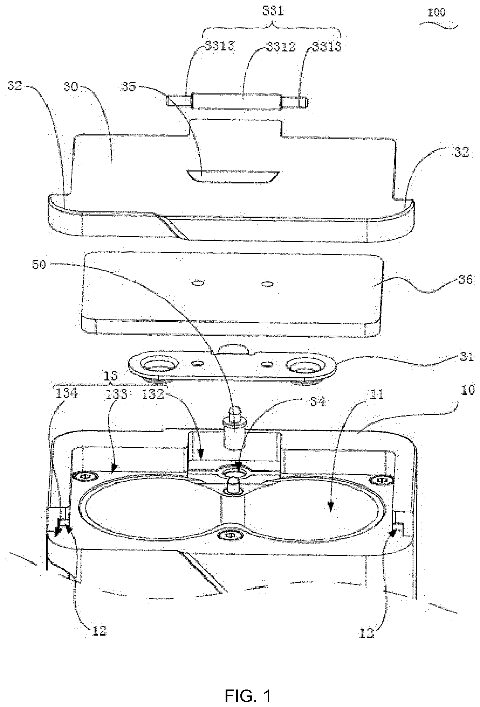

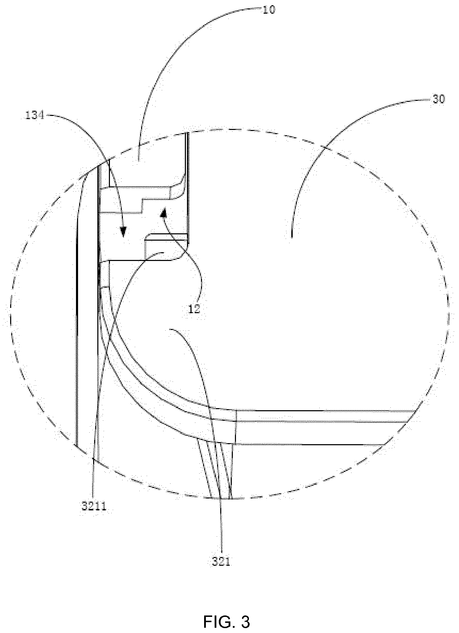

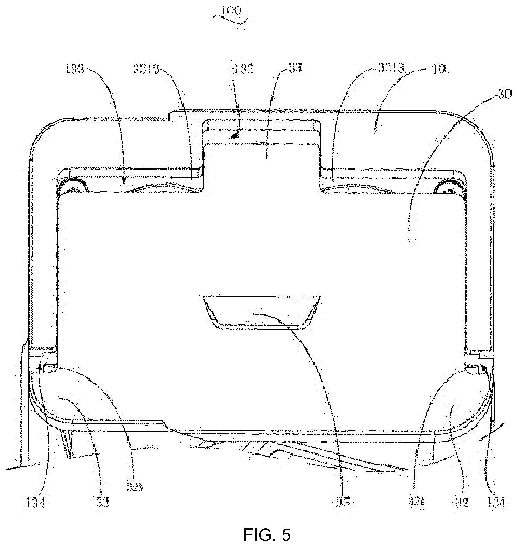

Referring to FIG. 1 to FIG. 7, in the embodiment of the invention, the battery assembly 100 comprises a main body 10 and a cover 30, the main body 10 is provided with a battery compartment 11 with an opening, one surface of the cover 30 facing the main body 10is provided with an electrode contact member 31, one end of the cover 30 is rotatably mounted on the main body 10, and the other end is provided with a engaging part32, the main body 10 is provided with a locking groove 12 for receiving the engaging part32, the cover 30 is coupled to the main body 10 via snap-fit connection and covers the opening when the engaging part32 is received in the locking groove 12, the electrode contact member 31 abuts against the battery in the battery compartment 11 to form an electrical circuit (i.e., an electrical loop), the main body 10 is further provided with at least one elastic member 50 toward the cover 30, and the elastic member 50 elastically abuts against the cover 30 when the cover 30 is coupled to the main body 10 via snap-fit connection.

For the battery assembly 100 of the technical solution of the invention, one end of the cover 30 is rotatably mounted on the main body 10. During the process of assembling and disassembling the battery, when the cover 30 is opened and closed, there is no abrasion between the electrode contact member 31 provided on the cover 30 and the electrode of the battery so as to cause a short circuit, and the cover 30 will not be separated from the main body 10 and is lost, which improves the safety and convenience. Moreover, in the technical solution of the invention, the main body 10 is further provided with at least one elastic member 50 toward the cover 30. When being mounted on the main body 10, the cover 30 squeezes the elastic member 50, so that the elastic member 50 has a certain elastic force on the cover 30, so that the cover 30 is less likely to shake relative to the main body 10, further preventing the phenomenon that there is no abrasion between the electrode contact member 31 provided on the cover 30and the electrode of the battery so as to cause a short circuit, and preventing the phenomenon that the shake of the battery cover during use results in unstable current contact and abnormal noise.

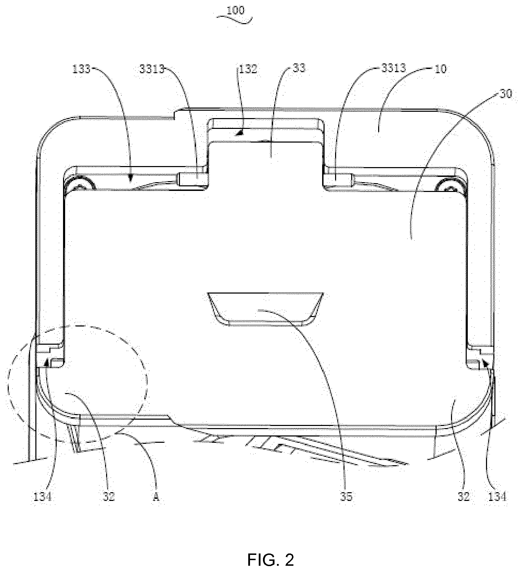

Specifically, as shown in FIG. 1 or FIG. 2, in the embodiment of the invention, the main body 10 is provided with a receiving groove 13 matching with the cover 30, one end of the cover 30 far away from the engaging part 32 is provided with a rotating part 33, the rotating part 33 is provided with a rotatable shaft assembly 331 and a first shaft hole 332 for receiving the rotatable shaft assembly 331, two side groove walls of the receiving groove 13 are provided with second shaft holes 131 matching with the rotatable shaft assembly 331, and the rotatable shaft assembly 331 passes through the first shaft hole 332 and is partially received in the two second shaft holes 131.Here, specifically, the rotating part 33 is convexly provided at one end of the cover 30 far away from the engaging part. A first shaft hole 332 is provided on the rotating part 33, and two second shaft holes 131 are provided correspondingly at two side groove walls of the receiving groove 13 so that the cover 30 may be received in the two second shaft holes 131 after the rotatable shaft assembly 331 passes through the first shaft hole 332. Thereby, the cover 30 is rotatably mounted on the main body 10. With respect to the conventional connecting manner in which one end of the cover 30 is provided with a rotating part 33, an outer periphery of the main body 10 is convexly provided with a mounting part corresponding to the rotating part 33, and then a rotatable shaft passes through the rotating part 33 and the mounting part so that the cover 30 and the main body 10 are hinged, both ends of the rotatable shaft assembly 331 of the embodiment are received in the main body 10 to prevent the phenomenon that the rotatable shaft assembly 331 falls off due to shaking during use.

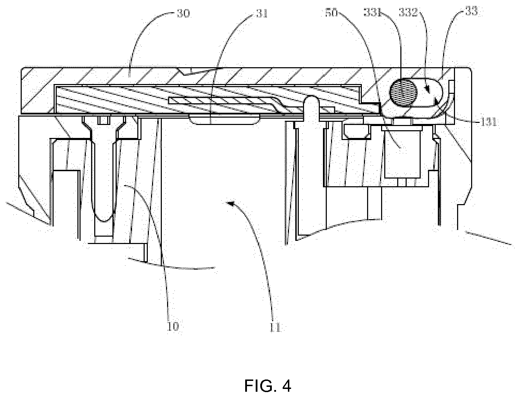

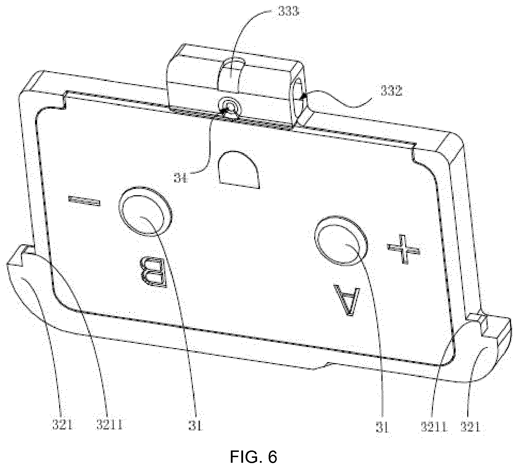

Specifically, as shown in FIG. 4 or FIG. 6, in the embodiment of the invention, the first shaft hole 332 is an oblong hole extending in the direction of a line connecting the rotating part 33 and the engaging part 32, a locked and fixed state is formed when the cover 30 slides along the oblong hole until the engaging part 32 is received in the locking groove 12, and an activity disengaged state is formed when the cover 30 slides along the oblong hole until the engaging part 32 is disengaged from the locking groove 12.Here, in the embodiment, the first shaft hole 332 is an oblong hole. The cover 30 is not only rotatable around the rotatable shaft assembly 331, but also performs linear push-and-pull movement in the direction of a line connecting the rotating part 33 and the engaging part 32. When the user pushes the cover 30 to move toward the rotating part 33, the engaging part 32 is driven to slide into the locking groove 12 to form a locked and fixed state. At this time, the elastic member 50 elastically abuts against the cover 30 so that the engaging part 32 abuts against and is locked to the inner groove wall of the locking groove 12; when the user pushes the cover 30 to move toward the engaging part 32, the engaging part 32 slides out of the locking groove 12 to form the activity disengaged state. At this time, a gap is generated between the cover 30 and the main body 10 under the elastic restoring force of the elastic member 50, so that a clearance is formed between the electrode contact member 31 and the electrode end of the battery to prevent short circuit due to the abrasion while facilitating opening and closing the cover 30.

It is to be understood that, in the actual application process, as shown in FIG. 1, FIG. 2 or FIG. 5, in order to facilitate the user to push the rear cover, in another embodiment of the invention, the manner in which one end of the cover 30 far away from the main body 10 is further provided with a non-slip rib or a groove handle 35 also falls within the scope of protection of the invention.

Specifically, as shown in FIG. 1, in the embodiment of the invention, the rotatable shaft assembly 331 comprises an elastic connecting member, a sleeve 3312 received in the first shaft hole 332, and two limiting heads 3313 exposed at both ends of the sleeve 3312, the elastic connecting member is received in the sleeve 3312 and is fixedly connected with the two limiting heads 3313, and each of the limiting heads 3313 is partially slidably mounted in the sleeve 3312 and abuts against the sleeve 3312 when sliding to the end position of the sleeve 3312.Here, in the embodiment, the elastic connecting member adopts a spring. The spring is received in the sleeve 3312, and both ends of the spring are connected with the limiting heads 3313, so that the limiting heads 3313 can squeeze the spring under the external driving force and slide toward the inside of the sleeve 3312; when the external driving force disappears, the limiting head 3313 is ejected under the elastic restoring force of the spring, which is convenient for assembly and disassembly.

Specifically, as shown in FIG. 1 to FIG. 3, in the embodiment of the invention, the receiving groove comprises a narrow-diameter section 132, a middle-diameter section 133 and a wide-diameter section 134, the rotating part 33 is received in the narrow-diameter section 132, an inner wall of the connecting position between the middle-diameter section 133 and the wide-diameter section 134 is recessed toward the middle-diameter section 133 to form a locking groove 12, the engaging part 32comprises two stoppers 321 provided at one end of the cover 30 far away from the rotating part 33, the two stoppers 321 are provided at both sides of the cover 30 and are each convexly provided with a buckle 3211, and the buckle 3211 is buckled to the locking groove 12 to form a locked and fixed state when the stopper 321 slides along the large-diameter section until being in contact with the end of the middle-diameter section 133.Here, in the embodiment, the rotating part 33 is received in the narrow-diameter section 132, and the two second shaft holes 131 are provided on the two side groove walls of the narrow-diameter section 132, so that when the rotatable shaft assembly 331 is mounted on the main body 10, the limiting heads 3313 is completely received in the second shaft hole 131, thereby effectively preventing the phenomenon that the emission of rotatable shaft assembly 331 falls off due to the shake. At the same time, the connection between the middle-diameter section 133 and the wide-diameter section 134 is recessed toward the middle-diameter section 133 to form a locking groove 12. The engaging part 32 is provided with two stoppers 321 on both sides at one end of the cover 30 far away from the rotating part 33. Each of the stoppers 321 is convexly provided with a buckle 3211, the buckle 3211 slides into the locking groove 12, and the elastic member 50 elastically abuts against the cover 30 so that the buckle 3211 closely fits the inner groove wall of the locking groove 12, thereby improving the stability of the connection and preventing the phenomenon that the shake results in abnormal noise.

Further, as shown in FIG. 1, the main body 10 is further provided with a receiving hole 14 for receiving the elastic member 50, one end of the elastic member 50 is received in the receiving hole 14 and is fixedly connected with the main body 10, and the other end elastically abuts against the cover 30when the cover 30 is coupled to the main body 10 via snap-fit connection. Here, in the embodiment, the main body 10 is provided with a receiving hole 14 for receiving the elastic member 50, so that after the long-term use of the user, the elastic member 50 will not shift to result in the phenomenon that the elastic member 50 has deflection loss in the direction of restoring force.

It is to be understood that, in the actual application process, the manner in which the elastic member 50 is received in the receiving hole 14 for limiting and fixing is not limited. For example, the manner in which the main body 10 is provided with a fixed column of the elastic member 50 (not shown) to fix the elastic member 50 falls within the scope of protection of the invention.

Specifically, the elastic member 50 is an elastic thimble, a spring, or an elastic plastic. Here, in the embodiment, an elastic thimble (not labeled) is used. The elastic thimble comprises a tube socket (not labeled) having an opening at one end, a spring (not shown), and a hemispherical contact (not labeled). The tube socket is connected with the receiving hole 14 in an interference fit. The spring is received in the tube socket. One end of the hemispherical contact is slidably mounted in the tube socket and the other end is exposed from the tube socket, and the hemispherical contact elastically abuts against the cover 30 when the cover 30 is coupled to the main body 10 via snap-fit connection.

Specifically, as shown in FIG. 1, FIG. 3, FIG. 6 and FIG. 7, in the embodiment of the invention, the elastic member 50 is provided on the small-diameter section and is provided directly facing the rotating part 33, the rotating part 33 abuts against the elastic member 50 when the cover 30 is mounted on the main body 10, and the rotating part 33 is provided with an avoidance groove 333 corresponding to the elastic member 50.Here, the elastic member 50 is provided on the small-diameter section, so that the elastic member 50 always abuts against the rotating part 33, which may effectively prevent the phenomenon that the cover 30 shakes in the first shaft hole 332 under no external force. At the same time, the user has a certain resistance feeling when operating, improving the using experience of the user. At the same time, the rotating part 33 is provided with an avoidance groove 333 corresponding to the elastic member 50. The groove depth value of the avoidance groove 333 is gradually reduced along the trajectory in which the cover 30 and the elastic member 50 perform contact movement when the cover 30is opened until the cover 30 is fastened.

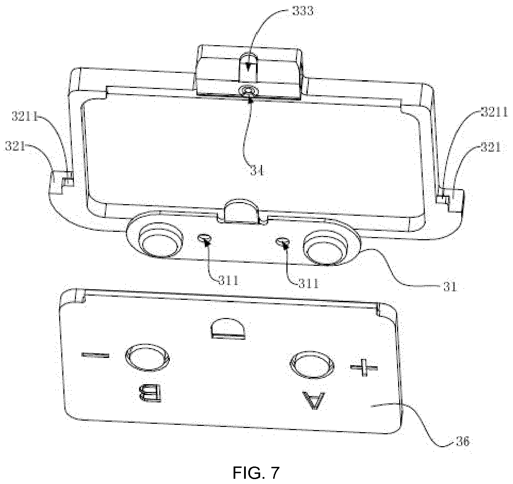

Further, as shown in FIG. 6 or FIG. 7, in the embodiment of the invention, the cover 30 is further provided with a positioning hole 34, and the elastic member 50 is received in the positioning hole 34 when the cover 30 is coupled to the main body 10 via snap-fit connection. Here, in the embodiment, the outer periphery of the positioning hole 34 is provided in a gradually expanding and rounded manner. The positioning hole 34 is provided at one end of the avoidance groove 333 close to the engaging part 32. When the cover 30 slides into the locked and fixed state along the first shaft hole 332, the elastic member 50 slides into the positioning hole 34 and makes a silvery noise, which is convenient for the user to judge whether it is in the locked and fixed state.

Specifically, as shown in FIG. 6 or FIG. 7, in the embodiment of the invention, at least two batteries may be received in the battery compartment 11 of the battery assembly 100. The cover 30 comprises an electrode mounting plate 36. The cover 30 is provided with a groove for receiving the electrode mounting plate 36. The electrode contact member 31 comprises a conductive sheet (not labeled) and at least two contact heads (not labeled). The conductive sheet is received in the groove. One end of each of the contact heads is connected with the conductive sheet, and the other end is provided through the electrode mounting plate 36 corresponding to an electrode of the battery (not labeled). When the cover 30 is coupled to the main body 10 via snap-fit connection, a contact head is in contact with an electrode of the battery to form an electrical circuit through the conductive sheet.

Specifically, as shown in FIG. 6 or FIG. 7, in the embodiment, the electrode contact member 31 is correspondingly provided with at least two mounting holes 311, which is convenient for machine-shaping by mounting or injection molding the electrode contact member 31 to the cover 30.

The invention further provides an electronic cigarette, wherein the electronic cigarette comprises an atomizer and a battery assembly 100. Refer to the above embodiment for the specific structure of the battery assembly 100. Due to the use of all the technical solutions of all the above embodiments, the electronic cigarette has at least all the beneficial effects brought by the technical solutions of the above embodiments, which will not be described in detail herein.

## Claims

1. A battery assembly, comprising a main body (10) and a cover (30), wherein the main body (10) is provided with a battery compartment (11) with an opening, one surface of the cover (30) facing the main body (10) is provided with an electrode contact member (31), one end of the cover (30) is rotatably mounted on the main body (10), and the other end is provided with an engaging part (32), the main body (10) is provided with a locking groove (12) for receiving the engaging part (32), when the engaging part (32) is received in the locking groove (12), the cover (30) is coupled to the main body (10) via snap-fit connection and covers the opening, the electrode contact member (31) abuts against the battery in the battery compartment (11) to form an electrical circuit, the main body (10) is further provided with at least one elastic member (50) facing the cover (30), and the elastic member (50) elastically abuts against the cover (30) when the cover (30) is coupled to the main body (10) via snap-fit connection;
**characterized in that** the cover (30) is further provided with a positioning hole (34) and the elastic member (50) is received in the positioning hole (34) when the cover (30) is coupled to the main body (10) via snap-fit connection.

2. The battery assembly according to claim 1, wherein the main body (10) is provided with a receiving groove (13) matching with the cover (30), one end of the cover (30) far away from the engaging part (32) is provided with a rotating part (33), the rotating part (33) is provided with a rotatable shaft assembly (331) and a first shaft hole (332) for receiving the rotatable shaft assembly (331), two side groove walls of the receiving groove (13) are provided with second shaft holes (131) matching with the rotatable shaft assembly (331), and the rotatable shaft assembly (331) passes through the first shaft hole (332) and is partially received in the two second shaft holes (131).

3. The battery assembly according to claim 2, wherein the first shaft hole (332) is an oblong hole extending in the direction of a line connecting the rotating part (33) and the engaging part (32), a locked and fixed state is formed when the cover (30) slides along the oblong hole until the engaging part (32) is received in the locking groove (12), and an activity disengaged state is formed when the cover (30) slides along the oblong hole until the engaging part (32) is disengaged from the locking groove (12).

4. The battery assembly according to claim 2, wherein the rotatable shaft assembly (331) comprises an elastic connecting member, a sleeve (3312) received in the first shaft hole (332), and two limiting heads (3313) exposed from both ends of the sleeve (3312), the elastic connecting member is received in the sleeve (3312) and is fixedly connected with the two limiting heads (3313), and each of the limiting heads (3313) is partially slidably mounted in the sleeve (3312), when sliding to the ends of the sleeve (3312), each of the limiting heads (3313) abuts against the sleeve (3312).

5. The battery assembly according to any one of claims 2 to 4, wherein the receiving groove comprises a narrow-diameter section (132), a middle-diameter section (133) and a wide-diameter section (134), the rotating part (33) is received in the narrow-diameter section (132), an inner wall of a connecting position between the middle-diameter section (133) and the wide-diameter section (134) is recessed toward the middle-diameter section (133) to form a locking groove (12), the engaging part (32) comprises two stoppers (321) provided at one end of the cover (30) far away from the rotating part (33), the two stoppers (321) are provided at both sides of the cover (30) and are each convexly provided with a buckle (3211), and the buckle (3211) is buckled to the locking groove (12) to form a locked and fixed state when the stopper (321) slides along the large-diameter section until being in contact with the end of the middle-diameter section (133).

6. The battery assembly according to claim 5, wherein the main body (10) is further provided with a receiving hole (14) for receiving the elastic member (50), one end of the elastic member (50) is received in the receiving hole (14) and is fixedly connected with the main body (10), and the other end elastically abuts against the cover (30) when the cover (30) is coupled to the main body (10) via snap-fit connection.

7. The battery assembly according to claim 6, wherein the elastic member (50) is an elastic thimble, a spring or an elastic plastic.

8. The battery assembly according to claim 6, wherein the elastic member (50) is provided on the small-diameter section and is provided directly facing the rotating part (33), the rotating part (33) abuts against the elastic member (50) when the cover (30) is mounted on the main body (10), and the rotating part (33) is provided with an avoidance groove (333) corresponding to the elastic member (50).

9. An electronic cigarette comprising an atomizer, wherein the electronic cigarette further comprises the battery assembly (100) according to any one of claims 1 to 8.

## Patentansprüche

1. Batterieanordnung, umfassend einen Hauptkörper (10) und einen Deckel (30), wobei der Hauptkörper (10) mit einem Batteriefach (11) mit einer Öffnung versehen ist, eine dem Hauptkörper (10) zugewandte Oberfläche des Deckels (30) mit einem Elektrodenkontaktelement (31) versehen ist, ein Ende des Deckels (30) drehbar am Hauptkörper (10) angebracht ist und das andere Ende mit einem Eingriffsteil (32) versehen ist, der Hauptkörper (10) mit einer Verriegelungsnut (12) zur Aufnahme des Eingriffsteils (32) versehen ist, wenn das Eingriffsteil (32) in der Verriegelungsnut (12) aufgenommen ist, der Deckel (30) über eine Schnappverbindung mit dem Hauptkörper (10) gekoppelt ist und die Öffnung abdeckt, das Elektrodenkontaktelement (31) an der Batterie im Batteriefach (11) anliegt, um einen elektrischen Stromkreis zu bilden, der Hauptkörper (10) ferner mit mindestens einem elastischen Element (50) versehen ist, das der Abdeckung (30) zugewandt ist, und das elastische Element (50) elastisch gegen die Abdeckung (30) anliegt, wenn die Abdeckung (30) über eine Schnappverbindung mit dem Hauptkörper (10) verbunden ist;
**dadurch gekennzeichnet, dass**
die Abdeckung (30) ferner mit einem Positionierungsloch (34) versehen ist und das elastische Element (50) in dem Positionierungsloch (34) aufgenommen wird, wenn die Abdeckung (30) mit dem Hauptkörper (10) über eine Schnappverbindung verbunden ist.

2. Batterieanordnung nach Anspruch 1, wobei der Hauptkörper (10) mit einer Aufnahmenut (13) versehen ist, die mit dem Deckel (30) zusammenpasst, ein Ende des Deckels (30), das von dem Eingriffsteil (32) entfernt ist, mit einem Drehteil (33) versehen ist, das Drehteil (33) mit einer drehbaren Wellenanordnung (331) und einem ersten Wellenloch (332) zur Aufnahme der drehbaren Wellenanordnung (331) versehen ist, zwei Seitennutwände der Aufnahmenut (13) mit zweiten Wellenlöchern (131) versehen sind, die mit der drehbaren Wellenanordnung (331) zusammenpassen, und die drehbare Wellenanordnung (331) durch das erste Wellenloch (332) hindurchgeht und teilweise in den beiden zweiten Wellenlöchern (131) aufgenommen ist.

3. Batterieanordnung nach Anspruch 2, wobei das erste Schaftloch (332) ein Langloch ist, das sich in der Richtung einer Linie erstreckt, die den rotierenden Teil (33) und den Eingriffsteil (32) verbindet, ein verriegelter und fixierter Zustand gebildet ist, wenn die Abdeckung (30) entlang des Langlochs gleitet, bis der Eingriffsteil (32) in der Verriegelungsnut (12) aufgenommen ist, und ein aktivitätsfreier Zustand gebildet ist, wenn die Abdeckung (30) entlang des Langlochs gleitet, bis der Eingriffsteil (32) aus der Verriegelungsnut (12) gelöst ist.

4. Batterieanordnung nach Anspruch 2, wobei die drehbare Wellenanordnung (331) ein elastisches Verbindungselement, eine in dem ersten Wellenloch (332) aufgenommene Hülse (3312) und zwei Begrenzungsköpfe (3313), die von beiden Enden der Hülse (3312) freiliegen, aufweist, das elastische Verbindungselement in der Hülse (3312) aufgenommen ist und fest mit den beiden Begrenzungsköpfen (3313) verbunden ist, und jeder der Begrenzungsköpfe (3313) teilweise verschiebbar in der Hülse (3312) montiert ist, wobei jeder der Begrenzungsköpfe (3313) beim Verschieben zu den Enden der Hülse (3312) an der Hülse (3312) anliegt.

5. Batterieanordnung nach einem der Ansprüche 2 bis 4, wobei die Aufnahmenut einen Abschnitt mit engem Durchmesser (132), einen Abschnitt mit mittlerem Durchmesser (133) und einen Abschnitt mit weitem Durchmesser (134) aufweist, der rotierende Teil (33) in dem Abschnitt mit engem Durchmesser (132) aufgenommen ist, eine Innenwand einer Verbindungsposition zwischen dem Abschnitt mit mittlerem Durchmesser (133) und dem Abschnitt mit weitem Durchmesser (134) in Richtung des Abschnitts mit mittlerem Durchmesser (133) zurückgesetzt ist, um eine Verriegelungsnut (12) zu bilden, der Eingriffsteil (32) zwei Stopper (321) umfasst, die an einem Ende der Abdeckung (30) weit entfernt von dem rotierenden Teil (33) vorgesehen sind, die zwei Stopper (321) an beiden Seiten der Abdeckung (30) vorgesehen sind und jeweils konvex mit einer Schnalle (3211) versehen sind, und die Schnalle (3211) in die Verriegelungsnut (12) geknickt wird, um einen verriegelten und fixierten Zustand zu bilden, wenn der Stopper (321) entlang des Abschnitts mit großem Durchmesser gleitet, bis er mit dem Ende des Abschnitts mit mittlerem Durchmesser (133) in Kontakt kommt.

6. Batterieanordnung nach Anspruch 5, wobei der Hauptkörper (10) ferner mit einem Aufnahmeloch (14) zur Aufnahme des elastischen Elements (50) versehen ist, ein Ende des elastischen Elements (50) in dem Aufnahmeloch (14) aufgenommen und fest mit dem Hauptkörper (10) verbunden ist und das andere Ende elastisch gegen die Abdeckung (30) stößt, wenn die Abdeckung (30) über eine Schnappverbindung mit dem Hauptkörper (10) gekoppelt ist.

7. Batterieanordnung nach Anspruch 6, wobei das elastische Element (50) ein elastischer Fingerhut, eine Feder oder ein elastischer Kunststoff ist.

8. Batterieanordnung nach Anspruch 6, wobei das elastische Element (50) an dem Abschnitt mit kleinem Durchmesser vorgesehen ist und direkt dem rotierenden Teil (33) zugewandt vorgesehen ist, wobei das rotierende Teil (33) gegen das elastische Element (50) anstößt, wenn die Abdeckung (30) an dem Hauptkörper (10) montiert ist, und wobei das rotierende Teil (33) mit einer Vermeidungsnut (333) versehen ist, die dem elastischen Element (50) entspricht.

9. Elektronische Zigarette mit einem Zerstäuber, wobei die elektronische Zigarette ferner die Batterieanordnung (100) nach einem der Ansprüche 1 bis 8 aufweist.

## Revendications

1. Ensemble de batterie, comprenant un corps principal (10) et un couvercle (30), dans lequel le corps principal (10) est muni d'un compartiment de batterie (11) avec une ouverture, une surface du couvercle (30) faisant face au corps principal (10) est munie d'un élément de contact d'électrode (31), une extrémité du couvercle (30) est montée de manière rotative sur le corps principal (10), et l'autre extrémité est munie d'une partie d'engagement (32), le corps principal (10) est muni d'une rainure de verrouillage (12) pour recevoir la partie d'engagement (32), lorsque la pièce d'enclenchement (32) est reçue dans la rainure de verrouillage (12), le couvercle (30) est couplé au corps principal (10) par une connexion à encliquetage et couvre l'ouverture, l'élément de contact de l'électrode (31) vient en butée contre la pile dans le compartiment de la pile (11) pour former un circuit électrique, le corps principal (10) est en outre pourvu d'au moins un élément élastique (50) faisant face au couvercle (30), et l'élément élastique (50) vient en butée de manière élastique contre le couvercle (30) lorsque le couvercle (30) est couplé au corps principal (10) via une connexion à encliquetage ;
**caractérisé en ce que**
le couvercle (30) est en outre pourvu d'un trou de positionnement (34) et l'élément élastique (50) est reçu dans le trou de positionnement (34) lorsque le couvercle (30) est couplé au corps principal (10) par une connexion à encliquetage.

2. Ensemble de batterie selon la revendication 1, dans lequel le corps principal (10) est pourvu d'une rainure de réception (13) correspondant au couvercle (30), une extrémité du couvercle (30) éloignée de la partie d'engagement (32) est pourvue d'une partie rotative (33), la partie rotative (33) est pourvue d'un ensemble d'arbre rotatif (331) et d'un premier trou d'arbre (332) pour recevoir l'ensemble d'arbre rotatif (331), deux parois latérales de la rainure de réception (13) sont pourvues de seconds trous d'arbre (131) correspondant à l'ensemble d'arbre rotatif (331), et l'ensemble d'arbre rotatif (331) passe à travers le premier trou d'arbre (332) et est partiellement reçu dans les deux seconds trous d'arbre (131).

3. Ensemble de batterie selon la revendication 2, dans lequel le premier trou d'arbre (332) est un trou oblong s'étendant dans la direction d'une ligne reliant la partie rotative (33) et la partie d'engagement (32), un état verrouillé et fixe est formé lorsque le couvercle (30) glisse le long du trou oblong jusqu'à ce que la partie d'engagement (32) soit reçue dans la rainure de verrouillage (12), et un état d'activité désengagé est formé lorsque le couvercle (30) glisse le long du trou oblong jusqu'à ce que la partie d'engagement (32) soit désengagée de la rainure de verrouillage (12).

4. Ensemble de batterie selon la revendication 2, dans lequel l'ensemble d'arbre rotatif (331) comprend un élément de connexion élastique, un manchon (3312) reçu dans le premier trou d'arbre (332), et deux têtes de limitation (3313) exposées à partir des deux extrémités du manchon (3312), l'élément de liaison élastique est reçu dans le manchon (3312) et est relié de manière fixe aux deux têtes de limitation (3313), et chacune des têtes de limitation (3313) est partiellement montée de manière coulissante dans le manchon (3312), lorsqu'elle coulisse vers les extrémités du manchon (3312), chacune des têtes de limitation (3313) vient en butée contre le manchon (3312).

5. Ensemble de batterie selon l'une quelconque des revendications 2 à 4, dans lequel la rainure de réception comprend une section de diamètre étroit (132), une section de diamètre moyen (133) et une section de diamètre large (134), la partie rotative (33) est reçue dans la section de diamètre étroit (132), une paroi intérieure d'une position de connexion entre la section de diamètre moyen (133) et la section de diamètre large (134) est évidée vers la section de diamètre moyen (133) pour former une rainure de verrouillage (12), la partie d'engagement (32) comprend deux butées (321) prévues à une extrémité du couvercle (30) éloignée de la partie rotative (33), les deux butées (321) sont prévues des deux côtés du couvercle (30) et sont chacune munie d'une boucle (3211) de forme convexe, et la boucle (3211) est bouclée sur la rainure de verrouillage (12) pour former un état verrouillé et fixe lorsque le bouchon (321) glisse le long de la section de grand diamètre jusqu'à être en contact avec l'extrémité de la section de diamètre moyen (133).

6. Ensemble de batterie selon la revendication 5, dans lequel le corps principal (10) est en outre pourvu d'un trou de réception (14) pour recevoir l'élément élastique (50), une extrémité de l'élément élastique (50) est reçue dans le trou de réception (14) et est reliée de manière fixe au corps principal (10), et l'autre extrémité vient en butée de manière élastique contre le couvercle (30) lorsque le couvercle (30) est couplé au corps principal (10) via une connexion à encliquetage.

7. Ensemble de batterie selon la revendication 6, dans lequel l'élément élastique (50) est une cosse élastique, un ressort ou un plastique élastique.

8. Ensemble de batterie selon la revendication 6, dans lequel l'élément élastique (50) est prévu sur la section de petit diamètre et est prévu directement en face de la partie rotative (33), la partie rotative (33) vient en butée contre l'élément élastique (50) lorsque le couvercle (30) est monté sur le corps principal (10), et la partie rotative (33) est munie d'une rainure d'évitement (333) correspondant à l'élément élastique (50).

9. Cigarette électronique comprenant un atomiseur, dans laquelle la cigarette électronique comprend en outre l'ensemble de batterie (100) selon l'une quelconque des revendications 1 à 8.
